# EUROPEAN PATENT SPECIFICATION

(11) **EP 2 087 944 B1**
(45) Date of publication and mention of the grant of the patent: **12.12.2012**
(21) Application number: 07830408.6
(22) Date of filing: 17.10.2007
(51) Int. Cl.: B05D 7/02, B05D 1/36, B05D 3/02, C09D 123/02

(54) **METHOD FOR COATING PLASTIC MOLDED ARTICLE**
VERFAHREN ZUR BESCHICHTUNG VON KUNSTSTOFFFORMKÖRPERN
PROCÉDÉ DE REVÊTEMENT D'UN ARTICLE EN PLASTIQUE MOULÉ

(30) Priority: 18.10.2006 JP 2006284107
(43) Date of publication of application: 12.08.2009
(73) Proprietor: Kansai Paint Co., Ltd, Amagasaki-shi, Hyogo 661-8555 (JP); Toyota Jidosha Kabushiki Kaisha, Toyota-shi, Aichi 471-8571 (JP)
(72) Inventor: TANAKA, Masaki, Nishikamo-gun Aichi 470-0206 (JP); NAKAO, Yasushi, Nishikamo-gun Aichi 470-0206 (JP); UENO, Naruhito, Nishikamo-gun Aichi 470-0206 (JP); KATSUTA, Hideaki, Nishikamo-gun Aichi 470-0206 (JP); TONOMURA, Hironori, Nishikamo-gun Aichi 470-0206 (JP); YUASA, Hirokazu, Nishikamo-gun Aichi 470-0206 (JP); SUDO, Takahisa, Toyota-shi Aichi 471-8571 (JP)
(74) Representative: Albrecht, Thomas
(86) International application number: PCT/JP2007/070674
(87) International publication number: WO 2008/050778

(56) References cited:
- EP-A1- 0 566 953
- EP-A1- 1 479 453
- WO-A1-01/79367
- WO-A1-2007/014651
- GB-A- 2 349 152
- JP-A- 05 032 759
- JP-A- 07 304 836
- JP-A- 10 296 171
- JP-A- 2004 331 911
- JP-A- 2005 000 905
- JP-A- 2005 042 001
- JP-A- 2005 042 001

## Description

### Technical Field

This invention relates to a method for coating plastic molded articles, which enables to form coating film which excels in adherability to plastic molded articles, water resistance, durability and the like, even when low-temperature baked.

### Background Art

Plastic molded articles are frequently used as inner and outer parts of car bodies in recent years. As the coating method of the plastic molded articles, for example, that by 3-coat-1-bake system comprising successively applying a water-based primer, water-based base paint and clear paint, and then baking the three-layered coating film to harden it simultaneously, is known (for example, see JP Hei 10 (1998)-296171A, JP 2004-331911A, and JP 2005-905A).

Recently, energy saving at the coating step is strongly demanded, and also in the above coating method, means for enabling low-temperature hardening wherein the baking temperature does not exceed 100°C has been attempted. Baking at such low temperatures, however, moisture is apt to remain in the coating films formed of water-based primer or water-based base paint, and also because of insufficient hardening, there is the problem that cohesive peeling takes place within the base coating film. For resolving such problems, for example, JP 2005-42001A discloses that the combined use of specific polyisocyanates as the crosslinking agent as contained in the clear paint improves drying property and hardenability of the coating film in low-temperature baking.

The method as described in above JP 2005-42001A improves the drying property or hardenability in 2-coat-1-bake system, however, application of such clear paint in coating method of three-layered coating film of water-based primer, water-based base paint and clear paint by 3-coat-1-bake system occasionally fails to produce sufficient drying property or hardenability during low-temperature baking.

### Summary of the Invention

The object of the present invention is to provide a coating method of plastic molded articles, which can form coating film excelling in adherability to the plastic molding articles, water resistance, durability and the like, even when such low-temperature baking as at not higher than 100°C is carried out in 3-coat-1-bake system, being free of the problems as described in the above.

According to the present invention, the above object is accomplished by a coating method of plastic molded articles comprising applying a water-based primer (I) onto a plastic molded article, applying onto the unhardened coated surface a water-based base coat paint (II), further applying onto the unhardened coated surface a clear coat paint (III), and simultaneously baking and hardening the so formed three-layered coating film, **characterized in** that
the water-based primer (I) contains an aqueous polyolefin resin (A) and an aqueous acrylic resin (B) at such ratios that the resin (A) is 10 - 90 wt% and the resin (B) is 90 - 10 wt%, based on the total solid content of the two resins,
the water-based base coat paint (II) contains an aqueous polyurethane resin (C), hydroxyl-containing aqueous acrylic resin and/or aqueous polyester resin (D), and a melamine resin (E), at such ratios that the resin (C) is 1 - 50 wt%, the resin (D) is 10 - 96 wt% and the resin (E) is 3 - 40 wt%, based on the total solid content of these three resins, the melamine resin (E) being a butyl/methyl mixed etherified melamine resin and having a weight-average molecular weight within a range of 1,500 - 3,000, and
the clear coat paint (III) contains a hydroxyl-containing resin (F) and an isocyanate crosslinking agent (G), the isocyanate crosslinking agent (G) containing a polyisocyanate compound having urethodione structure and at least trimer of a diisocyanate compound, at a solid weight ratio within a range of 10/90 - 50/50.

According to the coating method of the present invention, multilayer coating film which exhibits sufficient drying property and hardenability even under low-temperature baking and excellent adherability to plastic molded articles, water resistance, durability and, furthermore, recoating adherability, can be formed on plastic molded articles, by the method of coating a three-layered coating film composed of the water-based primer, water-based base paint and clear paint by 3-coat-1-bake system.

Hereinafter the coating method of the present invention is explained in further details.

### Coating object:

As the plastic articles which are the coating objects in the method of the present invention, for example, outer panel portions of automobiles such as bumper, spoiler, grill, fender and the like; plastic molded articles which are used in outer panel portions of household electric appliances and the like can be named, and as their materials, polyolefins produced by (co)polymerization of one or more of C₂₋₁₀ olefins, for example, ethylene, propylene, butylene, hexene and the like are particularly suitable. Besides, the method of the present invention is also applicable to plastic molded articles made of such materials as polycarbonate, ABS resin, urethane resin, polyamide and the like.

Where necessary, those plastic molding articles may be given such pre-treatment as degreasing, washing with water or the like preceding their coating, by the means known per se.

The present invention relates to a coating method comprising applying a water-based primer (I) onto a plastic molded article as above, thereafter applying onto the coated surface a water-based base coat paint (II), further applying onto the unhardened coated surface a clear coat paint (III), and baking the three-layered coating film to simultaneously harden the same.

### Water-based primer (I):

The water-based primer (I) used in the present invention is a water-based paint which comprises aqueous polyolefin resin (A) and aqueous acrylic resin (B) as the film-forming component, at such ratios that the resin (A) is 10 - 90 wt%, preferably 40 - 80 wt%, inter alia, 40 - 60 wt% and the resin (B), 10 - 90 wt%, preferably 20 - 60 wt%, inter alia, 40 - 60 wt%, based on the total solid content of the two resins. The primer can be formulated by dissolving or dispersing these two resins in an aqueous medium. Where the contents of the resins (A) and (B) deviate from the above ranges, the coating film performance becomes insufficient and, therefore, it is undesirable.

### Water-based polyolefin resin (A)

As the water-based polyolefin resin (A), resins having olefinic polymers as their main skeletal structure, into the molecules thereof hydrophilic groups such as carboxyl group or the like being introduced, can be used. Specifically, olefinic polymers which are modified with polymerizable unsaturated dicarboxylic acid or anhydride thereof are included, for example, those obtained by graft polymerization of olefinic polymers with polymerizable unsaturated dicarboxylic acid or anhydride thereof, conducted by per se known method.

Examples of the olefinic polymer before the modification include polymers formed by (co)polymerization of at least one olefinic monomer selected from ethylene and propylene, and copolymers obtained by copolymerization of these olefinic monomers with other monomers (e.g., butadine, isoprene, styrene, acrylonitrile and the like). Specifically, polypropylene, ethylene-propylene copolymer, ethylene-propylene-butadiene copolymer and the like can be named. These olefinic polymers preferably have a weight-average molecular weight generally within a range of 30,000 - 150,000, in particular, 50,000 - 120.000. inter alia, 60,000 - 110,000.

The polymerizable unsaturated dicarboxylic acid or anhydride thereof to be used for the modification of such olefinic polymer are the compounds having one polymerizable unsaturated bond and at least two carboxyl groups or acid anhydride groups thereof per molecule, examples of which include maleic acid or anhydride thereof, itaconic acid or anhydride thereof, citraconic acid or anhydride thereof.

These can be each used alone or in combination of two or more.

The graft polymerization of the polymerizable unsaturated dicarboxylic acid or anhydride thereof to the olefinic polymer can be carried out by the method known per se. The use ratio of the polymerizable unsaturated dicarboxylic acid or anhydride thereof in that occasion is preferably such that the acid value of the resulting modified polyolefin resin should fall within a range of normally 10 - 60 mgKOH/g, in particular, 20 - 50 mgKOH/g, inter alia, 20 - 40 mgKOH/g.

The olefinic polymer may also be chlorinated. The chlorination can be carried out either before or after the graft polymerization. The degree of chlorination (chlorine content) is generally within a range of 0 - 30 wt%, in particular, 15 - 25 wt%, and most preferably 15 - 22 wt%, based on the olefinic polymer before the graft polymerization.

The olefinic polymer may further be acrylic modified, where necessary. Examples of the polymerizable unsaturated monomer useful for the acrylic modification include alkyl esters of (meth)acrylic acid such as methyl (meth)acrylate, ethyl (meth)acrylate, propyl (meth)acrylate, butyl (meth)acrylate, hexyl (meth)acrylate, cyclohexyl (meth)acrylate, 2-ethylhexyl (meth)acrylate, lauryl (meth)acrylate, stearyl (meth)acrylate and the like; acrylic monomers such as (meth)acrylic acid, glycidyl (meth)acrylate, 2-hydroxyethyl (meth)acrylate, (meth)acrylamide, (meth)acrylonitrile and the like; and styrene and the like. These can be used either alone or in combination of two or more.

In the present specification, "(meth)acrylic" means acrylic or methacrylic, and "(meth)acrylate" means acrylate or methacrylate.

As the acrylic modification method, for example, a method comprising reacting the olefinic polymer first with a monomer reactable with the carboxyl groups in the olefinic polymer, such as glycidyl (meth)acrylate or the like to introduce into the olefinic polymer polymerizable unsaturated groups, and then copolymerizing with the polymerizable unsaturated groups, one or more kinds of other polymerizable unsaturated monomer(s). The use ratio of the polymerizable unsaturated monomer(s) in the acrylic modification is desirably not more than 30 wt%, preferably within a range of 0.05 - 25 wt%, inter alia, 0.1 - 20 wt%, based on the solid weight of the resulting polyolefin resin, from the viewpoint of compatibility with other components and adherability of the formed coating film.

It is also preferred for the resulting aqueous polyolefin resin that a part or all of the introduced carboxyl groups are neutralized with amine compound, to facilitate its dissolution or dispersion in water. Examples of the amine compound useful for the neutralization include tertiary amines such as triethylamine, tributylamine, dimethylethanolamine, triethanolamine and the like; secondary amines such as diethylamine, dibutylamine, diethanolamine, morpholine and the like; and primary amines such as propylamine, ethanolamine and the like. For dissolving or dispersing the polyolefin resin, it is permissible to use a surfactant, concurrently with the neutralization with amine compound.

### Aqueous acrylic resin (B)

The aqueous acrylic resin (B) includes, for example, water-soluble acrylic resins, in particular, carboxyl-containing acrylic resins, having a weight-average molecular weight of 5,000 - 100,000, preferably 10,000 - 90,000, inter alia, 20,000 - 80,000; acrylic resin emulsions, in particular, carboxyl-containing acrylic resin emulsions, having a weight-average molecular weight of at least 50,000, preferably at least 75,000, inter alia, at least 100,000; which are obtained by copolymerization of monomer mixtures of hydrophilic group-containing polymerizable unsaturated monomer(s) such as carboxyl-containing polymerizable unsaturated monomer(s) with other polymerizable unsaturated monomer(s) at least a part of which is acrylic monomer.

As the carboxyl-containing polymerizable unsaturated monomer, for example, (meth)acrylic acid, crotonic acid, maleic acid, fumaric acid, itaconic acid, half-monoalkyl esters of dicarboxylic acids among the foregoing and the like can be named. As the hydrophilic group-containing polymerizable unsaturated monomers other than the above, for example, polyalkylene chain-containing polymerizable unsaturated monomers such as polyethylene glycol (meth)acrylate, polypropylene glycol (meth)acrylate and the like can be named.

As those still other polymerizable unsaturated monomers, for example, C₁₋₂₄ alkyl esters or cycloalkyl esters of (meth)acrylic acid such as methyl (meth)acrylate, ethyl (meth)acrylate, n-or 1-propyl (meth)acrylate, n-, i-, or t-butyl (meth)acrylate, 2-ethylhexyl (meth)acrylate, cyclohexyl (meth)acrylate, lauryl (meth)acrylate, isorbornyl (meth)acrylate and the like; hydroxyalkyl esters of (meth)acrylic acid such as 2-hydroxyethyl (meth)acrylate, 2- or 3-hydroxypropyl (meth)acrylate, 4-hydroxybutyl (meth)acrylate and the like; glycidyl (meth)acrylate, acrylonitrile, acrylamide, styrene, vinyltoluene, vinyl acetate, vinyl chloride, 1,6-hexanediol diacrylate and the like can be named. They can be used either alone or in combination of two or more.

Copolymerization of the monomer mixture can be performed by the method known per se, for example, by solution polymerization when a water-soluble acrylic resin is desired, or by emulsion polymerization when an acrylic resin emulsion is intended.

Where the aqueous acrylic resin (B) is an acrylic resin emulsion obtained by emulsion polymerization, it may be an emulsion of multilayer-structured particles, which is obtained by multi-stage emulsion polymerization of the monomer mixture in the presence of water and an emulsifier.

The carboxyl groups in the aqueous acrylic resin (B) can be neutralized with basic substance, where necessary. The basic substance is preferably water-soluble, examples of which include ammonia, methylamine, ethylamine, propylamine, butylamine, dimethylamine, trimethylamine, triethylamine, ethylenediamine, morpholine, methylethanolamine, dimethylethanolamine, diethanolamine, triethanolamine, diisopropanolamine, 2-amino-2-methylpropanol and the like, which can be used either alone or in combination of two or more.

The water-based primer (I) used in the present invention can be blended with, where necessary, aqueous resin(s) other than the above resin (A) and resin (B) and furthermore with ordinary paint additives such as crosslinking agent, coloring pigment, extender pigment, electroconductive pigment, hardening catalyst, rheology-controlling agent, defoaming agent, organic solvent and the like, as suitably selected.

The water-based primer (I) can be applied onto plastic molded articles, its solid content at the coating time being adjusted to normally not lower than 30 wt%, preferably 35 - 45 wt% and, furthermore preferably its viscosity being adjusted to fall within a range of 20 - 40 seconds/Ford cup # 4/20°C, by such means as, for example, spray coating, airless spray coating, brush coating, dipping or the like. The coating film thickness of the water-based primer (I) preferably is within a range of normally 5 - 30 µm, in particular, 7 - 25 µm, inter alia, 10 - 20 µm, in terms of its hardened film thickness. The coating film of the water-based primer (I) can be given a forced drying at about 60 - about 100°C, in particular, about 70 - about 90°C, for about 1 - 5 minutes.

### Water-based base coat paint (II)

The water-based base coat paint (II) is a water-based paint comprising aqueous polyurethane resin (C), hydroxyl-containing aqueous acrylic resin and/or aqueous polyester resin (D) and melamine resin (E) as the film-forming component, at such ratios, based on the total solid content of these three resins, that the resin (C) is 1 - 50 wt%, preferably 3 - 30 wt%, inter alia, 5 - 20 wt%; the resin (D) is 10 - 96 wt%, preferably 30 - 80 wt%, inter alia, 40 - 75 wt%; and the resin (E) is 3 - 40 wt%, preferably 10 - 30 wt%, inter alia, 15 - 30 wt%. The water-based base coat paint (II) can be formulated by dissolving or dispersing those resin components, together with a coloring component such as coloring pigment, effect pigment, dye and the like, in an aqueous medium. Where the respective contents of above resin (C), resin (D) and resin (E) are outside the above-specified ranges, the paint's coating film performance becomes insufficient and hence is undesirable.

### Aqueous polyurethane resin (C)

As the aqueous polyurethane resin (C), water-soluble or water-dispersible hydrophilic polyurethane resins can be conveniently used. For example, aqueous dispersions of self-emulsifying type urethane resin which are prepared by the steps of reacting (i) aliphatic and/or alicyclic diisocyanate, (ii) diol having a number-average molecular weight of 500 - 5,000, (iii) low molecular weight polyhydroxyl compound and (iv) dimethylolalkanoic acid, at an NCO/OH equivalent ratio within a range of normally 1/0.5 - 1/0.95, in particular, 1/0.6 - 1/0.9, by one-shot process or multistage process; and chain-extending and emulsifying the resulting urethane prepolymers, either after or during neutralization; in particular, such aqueous dispersion from which a part or the whole of the organic solvent used in its preparation step is distilled off, having an average particle size ranging about 0.001 - 1.0 µm, in particular, about 0.02 - 0.3 µm, are preferred.

Examples of above aliphatic diisocyanate and/or alicyclic diisocyanate (i) include particularly C₂₋₁₂ aliphatic diisocyanates such as hexamethylene diisocyanate, 2,2,4-trimethylhexane diisocyanate, lysine diisocyanate; C₄₋₁₈ alicyclic diisocyanates such as 1,4-cyclohexane diisocyanate, isophorone diisocyanate, 4,4'-dicyclohexylmethane diisocyanate, methylcyclohexylene diisocyanate, isopropylidenedicyclohexyl-4,4'-diisocyanate; and modification products of these diisocyanates (carbodiimides, urethodiones, urethoimines and the like.

Also examples of the diols (ii) having number-average molecular weight of 500 - 5,000, preferably 1,000 - 3,000 include polyetherdiols which are obtained by polymerization or (block or random) copolymerization of alkylene oxide (ethylene oxide, propylene oxide, butylene oxide or the like) and/or heterocyclic ether (tetrahydrofuran or the like), specifically, such as polyethylene glycol, polypropylene glycol, polyethylene-propylene (block or random) glycol, polytetramethylene ether glycol, polyhexamethylene ether glycol, polyoctamethylene ether glycol and the like; and polyesterdiols obtained by polycondensation of dicaroboxylic acid (adipic acid, succinic acid, sebacic acid, glutaric acid, maleic acid, fumaric acid, phthalic acid or the like) with glycol (ethylene glycol, propylene glycol, 1,4-butanediol, 1,6-hexanediol, 3-methyl-1,5-pentanediol, neopentyl glycol, bishydroxymethylcyclohexane or the like), specifically, such as polyethylene adipate, polybutylene adipate, polyhexamethylene adipate, polyneopentyl adipate, poly-3-methylpentyl adipate, polyethylene/butylene adipate, polyneopentyl/hexyl adipate and the like. Furthermore, polylactonediols such as polycaprolactonediol and poly-3-methylvalerolactonediol; polycarbonatediols and the like may also be used.

The low molecular weight polyhydroxyl compound (iii) includes such compounds having at least two hydroxyl groups per molecule and having a number-average molecular weight less than 500, for example, glycols named as the starting material of above polyesterdiols and their alkylene oxide low molecular adducts (molecular weight, less than 500); trihydric alcohols, such as glycerin, trimethylolethane, trimethylolpropane and the like and their alkylene oxide low molecular adducts (molecular weight, less than 500); and mixtures of at least two of the foregoing. These low molecular weight polyhydroxyl compounds (iii) can be generally used at a ratio within a range of 0.1 - 20 wt%, preferably 0.3 - 15 wt%, inter alia, 0.5 - 10 wt%, to the aforesaid diols (ii).

Furthermore, the dimethylolalkanoic acid (iv) is an alkane having two hydroxyl groups and one carboxyl group per molecule, examples of which include dimethylolacetic acid, dimethylolpropionic acid, dimethylolbutyric acid and the like. Suitable use ratio of these dimethylolalkanoic acid is such that its amount in terms of carboxyl group (-COOH) content falls within a rang of 0.5 - 5 wt%, preferably 1 - 3 wt%, to the urethane prepolymer formed upon the reaction of components (i) - (iv).

To facilitate dissolution or dispersion in water of the aqueous polyurethane resin (C) which is obtained by reaction of above-described components (i) - (iv) by one-shot process or multistage process following the method known per se, it is preferred to neutralize a part or all of the carboxyl groups introduced into the same resin by the dimethylolalkanoic acid with an amine compound. Examples the amine compound useful in that occasion include tertiary amines such as triethylamine, tributylamine, dimethylethanolamine, triethanolamine and the like; secondary amines such as diethylamine, dibutylamine, diethanolamine, morpholine and the like; and primary amines such as propylamine, ethanolamine and the like. Suitable use rate of the amine is within a range of normally 0.5 - 1 equivalent, in particular, 0.7 - 1 equivalent, per 1 equivalent of carboxyl group in the dimethylolalkanoic acid.

The aqueous polyurethane resin (C) has neutralized carboxyl groups and also may concurrently have hydroxyl groups derived from the low molecular weight polyhydroxyl compound (iii). The aqueous polyurethane resin (C) preferably has an acid value within a range of generally 10 - 60 mgKOH/g, in particular, 20 - 50 mgKOH/g, inter alia, 20 - 40 mgKOH/g; and a hydroxyl value within a range of generally 10 - 60 mgKOH/g, in particular, 20 - 50 mgKOH/g, inter alia, 20 - 40 mgKOH/g.

It is particularly preferred to use such an aqueous polyurethane resin (C) meeting the following criteria: when a coating film made of the same resin alone is immersed in water (80°C in temperature) whose pH has been adjusted to 4.0 with acetic acid, for 2 hours, dried at 130°C for an hour, and let stand in a wet heat oven 70°C in temperature and 95% in humidity for 200 hours, the reduction rates in tensile strength and elongation of the coating film thereafter are within 25%, in particular, within 20%, as compared to those before the test; and furthermore blushing phenomenon is hardly or not at all perceived by visual observation of the dried coating film.

### Hydroxyl-containing aqueous acrylic resin and/or aqueous polyester resin (D)

As the hydroxyl-containing aqueous acrylic resin and/or aqueous polyester resin (D), either one of them or both can be used.

As the hydroxyl-containing aqueous acrylic resin, water-soluble acrylic resins having weight-average molecular weight ranging 5,000 - 100,000, preferably 10,000 - 90,000, inter alia, 20,000- 80,000; and acrylic resin emulsions having weight-average molecular weight of at least 50,000, preferably at least 75,000, inter alia, at least 100,000; can be named, which are obtained by copolymerization of monomer mixtures of the hydroxyl-containing polymerizable unsaturated monomer(s), hydrophilic group-containing polymerizable unsaturated monomer(s) such as carboxyl-containing polymerizable unsaturated monomer(s), and still other polymerizable unsaturated monomer(s).

Examples of the hydroxyl-containing polymerizable unsaturated monomer include hydroxyalkyl esters of acrylic acid or methacrylic acid, such as 2-hydroxyethyl (meth)acrylate, 2- or 3-hydroxypropyl (meth)acrylate, 4-hydroxybutyl (meth)acrylate and the like; and polyethylene glycol (meth)acrylate, polypropylene glycol (meth)acrylate and the like. These can be used either alone or in combination of two or more.

As the hydropholic group-containing polymerizable unsaturated monomer such as carboxyl-containing polymerizable unsaturated monomer, and as the other polymerizable unsaturated monomer, they can be suitably selected from those earlier exemplified in relation to the aqueous acrylic resin (B) and used.

Copolymerization of these monomer mixtures can be performed by per se known method, for example, where a water-soluble acrylic resin is to be formed, by solution polymerization, and where an acrylic resin emulsion is intended, by emulsion polymerization or the like.

The carboxyl groups in the aqueous acrylic resin can be neutralized with the earlier described basic substance, where necessary.

The hydroxyl-containing aqueous acrylic resin preferably has an acid value within a range of generally 10 - 100 mgKOH/g, in particular, 15 - 80 mgKOH/g, inter alia, 20 - 60 mgKOH/g; and a hydroxyl value within a range of generally 10 - 250 mgKOH/g, in particular, 20 - 200 mgKOH/g, inter alia, 30 - 150 mgKOH/g.

The hydroxyl-containing aqueous polyester resin includes those obtained by neutralizing oil-free or oil-modified polyester resins which are prepared by esterification reaction normally using polyhydric alcohols and polybasic acids, and further monobasic acids, oil component (including fatty acid thereof) and the like where necessary. It is adequate for the polyester resins to have weight-average molecular weight within a range of normally about 3,000 - 100,000, preferably 4,000 - 70,000, inter alia, 5,000 - 30,000.

Examples of polyhydric alcohol include ethylene glycol, diethylene glycol, propylene glycol, butanediol, pentanediol, hexanediol, 2,2-dimetylpropanediol, glycerin, trimethylolpropane, pentaerythritol, ethylene oxide adducts or propylene oxide adducts of bisphenol compounds and the like. These can be used either alone or in combination of two or more. Examples of polybasic acid include phthalic acid, isophthalic acid, tetrahydrophthalic acid, hexahydrophthalic acid, maleic acid, succinic acid, adipic acid, sebacic acid, trimellitic acid, pyromellitic acid and their anhydrides. These can be used either alone or in combination of two or more. As the monobasic acid, for example, benzoic acid, t-butylbenzoic acid and the like can be named, and as the oil component, for example, castor oil, dehydrated castor oil, safflower oil, soybean oil, linseed oil, tall oil, coconut oil and their fatty acids and the like can be named, which can be used either alone or in combination of two or more.

Introduction of carboxyl groups into the polyester resins can be performed by, for example, concurrent use of such polybasic acid having at least three carboxyl groups per molecule, such as trimellitic acid or pyromellitic acid as a part of the polybasic acid component, or by half ester addition of dicarboxylic acid. Also introduction of hydroxyl groups can be easily done, for example, by concurrent use of a polyhydric alcohol having at least three hydroxyl groups per molecule, such as glycerin, trimethylolpropane and the like, as a part of the polyhydric alcohol component.

As the hydroxyl-containing polyester resin, such a polyester resin prepared by the following steps is particularly preferred, from the viewpoint of coating film performance such as water resistance of the formed coating film and finished property, and furthermore improvement in compatibility with other components blended therewith and stabilization of the paint: preparing a polyester polyol by reaction of, in addition to the above-described polyhydric alcohol and polybasic acid, a monoepoxide compound having long chain hydrocarbon group, and further reacting the polyester polyol with at least tri-functional polybasic acid and/or polyisocyanate compound.

Examples of at least trifunctional polybasic acid include trimellitic anhydride, ethylene glycol bis(anyhydrotrimellitate), 1,3-propanediol bis(anhydrotrimellitate), pyromellitic anhydride and the like; and as the polyisocyanate compound, for example, diisocyanates such as hexamethylene diisocyanate, isophorone diisocyanate and the like, and biuret type adducts, isocyanurate ring adducts of these diisocyanates and the like can be used.

Carboxyl groups in the polyester resins can be neutralized with previously described basic substance.

The hydroxyl-containing aqueous polyester resin preferably has an acid value within a range of generally 10 - 100 mgKOH/g, in particular, 20 - 80 mgKOH/g, inter alia, 20 - 50 mgKOH/g; and a hydroxyl value within a range of generally 10 - 300 mgKOH/g, in particular, 30- 200 mgKOH/g, inter alia, 50 - 200 mgKOH/g.

### Melamine resin (E)

In the present invention, a butyl/methyl mixed etherified melamine resin having the weight-average molecular weight within a range of 1,500 - 3,000, preferably 1,500 - 2,500, inter alia, 1,500 - 2,000 is used as the melamine resin (E). In the mixed etherified melamine resin, the mol ratio of the butyl ether group/methyl ether group present preferably lies within a range of normally 4/6 - 9/1, in particular, 5/5 - 9/l.

### Coloring component

The water-based base coat paint (II) used in the present invention can contain, in addition to the so far described resin (C), resin (D) and resin (E), coloring pigment, effect pigment, dye and the like as the coloring component. As the coloring pigment, for example, titanium oxide, carbon black, lead chromate, yellow achre, yellow iron oxide, Hansa Yellow, pigment yellow, chrome orange, chrome vermilion, permanent orange, umber, permanent red, brilliant carmine, fast violet, methyl violet lake, ultramarine blue, Prussian Blue, cobalt blue, phthalocyanine blue, pigment green, naphthol green and the like can be named. As the effect pigment, for example, metallic pigments such as aluminum powder, vapor-deposited aluminum, aluminum oxide, bronze powder, copper powder, tin powder, micaceous iron oxide; and iridescent pigments such as titanium oxide- or iron oxide-coated mica flake, mica flake and the like can be named, while not limited to those named. These pigments can be used either alone or in combination of two or more, to provide solid color paint, metallic paint or iridescent paint.

The water-based base coat paint (II) can further be blended with, where necessary, aqueous resin(s) other than the above resins (C), (D) and (E), and paint additives such as hardening catalyst, rheology controlling agent, defoaming agent, organic solvent and the like as suitably selected.

It is preferred to adjust the viscosity of the water-based base coat paint (II) at the coating time, to one within a range of 20 - 30 seconds/Ford cup # 4/20°C, and its solid content, to at least 15 wt%, in particular, to one within a range of 20 - 35 wt%.

The water-based base coat paint (II) can be applied onto the surface of plastic molded articles which is already coated with the water-based primer (I), by such methods as airspray coating, airless spray coating, electrostatic coating, dipping and the like. The adequate coating film thickness of the base coat paint is normally within a range of 10 - 40 µm, in particular, 12 - 25 µm, in terms of hardened coating film. The coating film per se of the water-based base coat paint (II) can be converted to hardened coating film as formed by the three-dimensional crosslinking reaction, by heating at the temperatures of about 60 - about 140°C, preferably about 80 - about 120°C, for around 5 - 40 minutes.

### Clear coat paint (III):

The clear coat paint (III) to be used in the present invention can be an organic solvent-based, thermosetting type paint comprising a hydroxyl-containing resin (F) and isocyanate crosslinking agent (G), and furthermore, where necessary, can be suitably blended with additives for paint such as UV absorber, light stabilizer, hardening catalyst, coated surface regulating agent, rheology controlling agent, antioxidant, wax and the like. It is normally desirable that the clear coat paint (III) is formed of a base resin component whose chief component is hydroxy-containing resin (F) and a crosslinking agent component whose chief component is the crosslinking agent (G), and is of binary component type in which the above components are mixed immediately before coating and used.

### Hydroxyl-containing resin (F)

As the hydroxyl-containing resin (F), for example, hydroxyl-containing acrylic resin, polyester resin, alkyd resin, fluorinated resin, urethane resin, silicon-containing resin and the like can be named, among which hydroxyl-containing acrylic resin is particularly preferred.

The hydroxyl-containing resin (F) preferably has a hydroxyl value within a range of normally 10 - 120 mgKOH/g, in particular, 25- 100 mgKOH/g, inter alia, 40 - 80 mgKOH/g.

### Isocyanate crosslinking agent (G)

The isocyanate crosslinking agent (G) contains a polyisocyanate compound having urethodione structure and at least trimer of isocyanate compound at a solid weight ratio within a range of 10/90 - 50/50, preferably 15/85 - 40/60, inter alia, 15/85 - 35/65. Where the content ratio of the polyisocyanate compound having urethodione structure and at least trimer of diisocyanate compound lies outside the above-specified range, the finally formed multi-layered coating film comes to have insufficient hardenability and the coating film performance becomes insufficient, which is undesirable.

As the polyisocyanate compound having urethodione structure, urethodione of hexamethylene diisocyanate which is prepared by the method known per se is suitable. Also as at least trimer of diisocyanate compound, for example, isocyanurates, biurets, allophanates and the like of such diisocyanates as hexamethylene diisocyanate, isophorone diisocyanate and the like can be used.

The isocyanate crosslinking agent (G) preferably has a viscosity generally not higher than 1000 mPa·s/25°C, in particular, not higher than 900 mPa·s/25°C, inter alia, 800 mPa·s/25°C, from the viewpoint of hardenability of multilayered coating film and higher solid content of the clear coat paint.

The use ratio of the hydroxyl-containing resin (F) to the isocyanate crosslinking agent (G) is desirably so selected that normally 0.8 - 2.0 equivalent, in particular, 0.8 - 1.8 equivalent, inter alia, 0.8 - 1.6 equivalent, of the isocyanate groups in the crosslinking agent (G) should be present per equivalent of the hydroxyl groups in the resin (F).

It is desirable to adjust the viscosity of the clear coat paint (III) at its application time, to fall within a range of 14 - 20 seconds/Ford cup # 4/20°C. The paint can be applied onto the unhardened coated surface of the water-based base coat paint (II), by such methods as air spray coating, airless spray coating, electrostatic coating, dipping and the like. Its suitable coating film thickness is normally within a range of 15 - 80 µm, in particular, 25 - 50 µm, in terms of hardened coating film.

According to the present invention, after applying the water-based primer (I), water-based base coat paint (II) and clear paint (III) wet-on-wet as above, the three-layered coating film can be approximately simultaneously crosslinked and hardened, by heating it at the baking temperature of about 40 - about 110°C, in particular, about 80 - about 100°C, for about 10 - about 40 minutes.

### Examples

Hereinafter the present invention is explained in further details referring to Examples, it being understood that the invention is not limited to these Examples only. Furthermore, "part" and "%" signify "weight part" and "weight %", unless otherwise specified.

### Aqueous polyolefin resin (A):

Aqueous dispersion of maleic anhydride-modified chlorinated polyolefin; added amount of maleic acid, 2.2 wt%; chlorine content, 14%; weight-average molecular weight, about 60,000.

### Aqueous acrylic resin (B):

Acrylic resin emulsion, molecular weight, 300,000; acid value, 10 mgKOH/g; hydroxyl value, 9 mgKOH/g; calculated Tg, 50°C; calculated SP, 8.8.

### Aqueous polyurethane resin (C):

U-COAT UX-5210, tradename; Sanyo Chemical Industries, Ltd.; polycarbonate type urethane resin; solid content, 32%.

### Hydroxyl-containing aqueous acrylic resin (D-1)

A reactor equipped with a thermometer, thermostat, stirrer, reflux condenser and dropping device was charged with 145 parts of deionized water and 1.2 parts of Newcol 562 SF (Note 1), which were stirred and mixed in nitrogen gaseous current, and the temperature was raised to 80°C. Then 1% of the total amount of the monomer mixture (1) specified in the following and 5.2 parts of 3% aqueous ammonium persulfate solution were introduced into the reactor, and maintained at 80°C for 15 minutes. Thereafter the remainder of the monomer mixture (1) was dropped into the reactor over 3 hours. After termination of the dropping, the reaction mixture was aged for an hour, followed by dropwise addition of the following monomer mixture (2) over 2 hours. After an hour's aging, the reaction mixture was cooled to 30°C, while 89 parts of 1.5% aqueous dimethylethanolamine solution was gradually added to the reactor. Thereafter the reaction mixture was discharged from the reactor while being filtered through 100-mesh nylon cloth, to provide an acrylic resin emulsion (D-1) (solid content, 25.2%) having an average particle size of 100 nm, acid value of 30.7 mgKOH/g and hydroxyl value of 22.1 mgKOH/g.
(Note 1) Newcol 562 SF, tradename, Nippon Nyukazai Co., Ltd., ammonium polyoxyethylenealkylbenzenesulfonate; active component, 60%.

Monomer mixture (1): The monomer mixture (1) was obtained by mixing and stirring 94.3 parts of deionized water, 17 parts of methyl methacrylate, 80 parts of n-butyl acrylate, 3 parts of allyl methacrylate and 1.2 parts of Newcol 562SF.

Monomer mixture (2): The monomer mixture (2) was obtained by mixing and stirring 39 parts of deionized water, 15.4 parts of methyl methacrylate, 2.9 parts of n-butyl acrylate, 5.9 parts of hydroxyethyl acrylate, 5.1 parts of methacrylic acid and 0.5 part of Newcol 562SF.

### Preparation of hydroxyl-containing polyester resin (D-2)

A reactor equipped with a stirrer, reflux condenser, water separator and thermometer was charged with 273 parts of trimethylolpropane, 200 parts of succinic anhydride and 490 parts of CARDURA E10P (tradename, Japan Epoxy Resin Co., neodecanoic acid monoglycidyl ester), which were reacted at 100 - 230°C for 3 hours (sampling at this time point found the hydroxyl value to be 350 mgKOH/g and the number-average molecular weight, 580). Thereafter further 192 parts of trimellitic anhydride was added to cause the condensation reaction at 180°C, to provide a polyester resin (D-2) having an acid value of 49 mgKOH/g, hydroxyl value of 195 mgKOH/g and number-average molecular weight of 1,500.

### Melamine resin (E)

CYMEL 250 (tradename, Cytec Industries, Inc.; methyl/butyl mixed etherified melamine resin; weight-average molecular weight. 3,500; solid content, 80%)

### Preparation of water-based primer paint (I)

A water-based primer paint (I) was obtained by blending, mixing and dispersing 60 parts by solid weight of the aqueous polyolefin resin (A), 40 parts by solid weight of the aqueous acrylic resin (B), 80 parts of JR-806 (tradename, Tayca Corporation, titanium white) and 21 parts of VULCAN XC-72 (tradename, CABOT Co., conductive carbon black pigment) following the accepted practice, and diluting the product with deionized water to render the solid content 35%.

### Preparation of water-based base coat paint

### Preparation Example 1

To 30 parts of the polyester resin (D-2), 38 parts (about 30 parts by solid weight) of the melamine resin (E) having a solid content of 80%, 119 parts (about 30 parts by solid weight) of the acrylic resin emulsion (D-1) having a solid content of 25.2%, and 25 parts (10 parts by solid weight) of aqueous urethane resin (C) having a solid content of 40% were added under stirring. Thereafter ALUMIPASTE GX180A (tradename, Asahi Kasei Corporation, aluminum flake paste) of an amount as would provide 20 parts of the aluminum pigment was added under stirring, and dispersed by mixing. Further dimethylethanolamine and deionized water were added to adjust the pH to 8.0 and the viscosity to 40 seconds/Ford cup # 4/20°C. Thus a water-based base coat paint (II-1) was obtained.

### Preparation Example 2

Preparation Example 1 was repeated except that the blended amount of the melamine resin (E) was changed to 25 parts (20 parts by solid weight) and the blended amount of the aqueous urethane resin (C) was changed to 50 parts (20 parts by solid weight), to provide a water-based base coat paint (II-2).

### Preparation Example 3

Preparation Example 1 was repeated except that the blended amount of the melamine resin (E) was changed to 0 part and the blended amount of the aqueous urethane resin (C) was changed to 100 parts (40 parts by solid weight), to provide a water-based base coat paint (II-3).

### Preparation Example 4

Preparation Example 1 was repeated except that the blended amount of the melamine resin (E) was changed to 50 parts (40 parts by solid weight) and the blended amount of the aqueous urethane resin (C) was changed to 0 part, to provide a water-based base coat paint (II-4).

### Preparation of clear coat paint

### Preparation Example 5

Seventy (70) parts by solid weight of an acrylic resin (Note 2) and 30 parts by solid weight of an isocyanate crosslinking agent (G-1) (composed of 20% of urethodione form of hexamethylene diisocyanate and 80% of at least trimer of the same diisocyanate; NCO content, 20%; viscosity, 800 mPa·s/25°C) were blended, and mixed with organic solvent (toluene/xylene equal weight liquid mixture). Thus a clear coat paint (III-1) whose viscosity was adjusted to 14 second/Ford cup # 4/20°C was obtained.

### Preparation Example 6

Seventy (70) parts by solid weight of an acrylic resin (Note 2) and 30 parts by solid weight of the isocyanate crosslinking agent (G-1) (composed of less than 1% of urethodione form of hexamethylene diisocyanate and at least 99% of at least trimer of the same diisocyanate; NCO content, 20%; viscosity, 1200 mPa·s/25°C) were blended, and mixed with organic solvent (toluene/xylene equal weight liquid mixture). Thus a clear coat paint (III-2) whose viscosity was adjusted to 14 seconds/Ford cup # 4/20°C was obtained.
(Note 2) acrylic resin: an acrylic resin having a hydroxyl value of 120 mgKOH/g and weight-average molecular weight of 8,000, which was obtained by radical polymerization reaction of 25 parts of styrene, 20 parts of n-butyl methacrylate, 30 parts of n-butyl acrylate, 24 parts of hydroxyethyl methacrylate and 1 part of acrylic acid, according to the accepted method.

### Preparation of coated articles

### Example 1

A polypropylene molded bumper (degreased) was spray coated with the water-based primer (I) as prepared in the above, to the dry film thickness of about 10 µm and preheated at 80°C for 3 minutes. Then the water-based base coat paint (II-1) was electrostatically coated thereon to the dry film thickness of about 15 µm, and preheated at 80°C for 3 minutes. Onto the unhardened coated surface, the clear coat paint (III-1) was electrostatically coated to the dry film thickness of about 30 µm, followed by 30 minutes' heating and drying at 90°C to provide a coated article.

### Example 2

Example 1 was repeated except that the water-based base coat paint (II-2) was used instead of the water-based base coat paint (II-1), to provide a coated article.

### Comparative Example 1

Example 1 was repeated except that the water-based base coat paint (II-3) was used instead of the water-based base coat paint (II-1), to provide a coated article.

### Comparative Example 2

Example 1 was repeated except that the clear coat paint (III-2) was used instead of the clear coat paint (III-1), to provide a coated article.

### Comparative Example 3

Example 1 was repeated except that the water-based base coat paint (II-4) was used instead of the water-based base coat paint (II-1), to provide a coated article.

The coated articles prepared as above were subjected to the following performance tests. The results are shown in Table 1.

### Performance test methods

(*1) Initial adherability: The coated surface of each of the coated test articles was crosscut with a cutter to the depth reaching the substrate, to form one-hundred 2 mm × 2 mm squares. Then an adhesive cellophane tape was stuck thereon, and rapidly peeled off at 20°C. The remaining number of the coating film squares was examined and evaluated according to the following standard:
   ○ 100 squares (no peeling occurred)
   Δ 99 - 51 squares
   × not more than 50 squares.
(*2) Water resistance: Each a part of the test coated articles was cut out and immersed in 40°C warm water for 10 days, withdrawn and dried. The test specimens were given the adherability test similar to the above initial adherability test and the remaining number of coating film squares was examined and evaluated according to the above standard. Also the coated surfaces after the withdrawal was visually observed, and evaluated according to the following standard:
   ○ no blistering
   × bristering occurred.
(*3) Recoat adherability: The coated test articles were left standing at room temperature for 7 days, and onto their coated surfaces the same paints were recoated and hardened. After standing at room temperature for 3 days, they were given the adherability test in the manner similar to the initial adherability test, the remaining number of the coating film squares was examined and evaluated according to the above standard.

**TABLE 1**

| | Example 1 | Example 2 | Comparative Example 1 | Comparative Example 2 | Comparative Example 3 |
|---|---|---|---|---|---|
| Initial adherability | ○ | ○ | ○ | Δ | ○ |
| Water resistance (adhesion) | ○ | ○ | ○ | × | × |
| Water resistance (blistering) | ○ | ○ | ○ | × | × |
| Recoat adherability | ○ | ○ | × | × | ○ |

## Claims

1. A coating method of plastic molded articles comprising applying a water-based primer (I) onto a plastic molded article, applying onto the unhardened coated surface a water-based base coat paint (II), further applying onto the unhardened coated surface a clear coat paint (III), and simultaneously baking and hardening the so formed three-layered coating film, **characterized in that**
the water-based primer (I) contains an aqueous polyolefin resin (A) and an aqueous acrylic resin (B) at such ratios that the resin (A) is 10 - 90 wt% and the resin (B) is 90 - 10 wt%, based on the total solid content of the two resins,
the water-based base coat paint (II) contains an aqueous polyurethane resin (C), hydroxyl-containing aqueous acrylic resin and/or aqueous polyester resin (D), and a melamine resin (E), at such ratios that the resin (C) is 1 - 50 wt%, the resin (D) is 10 - 96 wt% and the resin (E) is 3 - 40 wt%, based on the total solid content of these three resins, the melamine resin (E) being a butyl/methyl mixed etherified melamine resin and having a weight-average molecular weight within a range of 1,500 - 3,000, and
the clear coat paint (III) contains a hydroxyl-containing resin (F) and an isocyanate crosslinking agent (G), the isocyanate crosslinking agent (G) containing a polyisocyanate compound having urethodione structure and at least trimer of a diisocyanate compound, at a solid weight ratio within a range of 10/90 - 50/50.

2. A method according to Claim 1, in which the aqueous polyolefin resin (A) is obtained by graft polymerization of polymerizable unsaturated dicarboxylic acid or anhydride thereof to an olefinic polymer.

3. A method according to Claim 1, in which the aqueous acrylic resin (B) is a carboxyl-containing acrylic resin or a carboxyl-containing acrylic resin emulsion.

4. A method according to Claim 1, in which the water-based primer (I) contains the aqueous polyolefin resin (A) and aqueous acrylic resin (B) at such ratios that the resin (A) is 40 - 80 wt% and resin (B) is 60 - 20 wt%, based on the total solid content of the two resins.

5. A method according to Claim 1, in which the aqueous polyurethane resin (C) is an aqueous dispersion of self-emulsifying type urethane resin having an average particle size of 0.001 - 1.0 µm, which is prepared by the steps of reacting (i) aliphatic and/or alicyclic diisocyanate, (ii) diol having a number-average molecular weight of 500 - 5,000, (iii) low molecular weight polyhydroxyl compound and (iv) dimethylolalkanoic acid, at an NCO/OH equivalent ratio within a range of 1/0.5 - 1/0.95, by one-shot process or multistage process; and chain-extending and emulsifying the resulting urethane prepolymer, either after or during neutralization.

6. A method according to Claim 1, in which the hydroxyl-containing aqueous acrylic resin and/or aqueous polyester resin (D) is an aqueous acrylic resin having an acid value of 10 - 100 mgKOH/g and a hydroxyl value of 10 - 250 mgKOH/g and/or an aqueous polyester resin having an acid value of 10 - 100 mgKOH/g and a hydroxyl value of 10 - 300 mgKOH/g.

7. A method according to Claim 1, in which the melamine resin (E) is a butyl/methyl mixed etherified melamine resin, the mol ratio of the butyl ether group/methyl ether group therein being within a range of 4/6 - 9/1.

8. A method according to Claim 1, in which the water-based base coat paint (II) comprises aqueous polyurethane resin (C), hydroxyl-containing aqueous acrylic resin and/or aqueous polyester resin (D) and melamine resin (E) at such ratios, based on the total solid content of these three resins, that the resin (C) is 3 - 30 wt%, the resin (D) is 30 - 80 wt%, and the resin (E) is 10 - 30 wt%.

9. A method according to Claim 1, in which the hydroxyl-containing resin (F) is a hydroxyl-containing acrylic resin.

10. A method according to Claim 1, in which the isocyanate crosslinking agent (G) has a viscosity not higher than 1000 mPa·s/25°C.

11. A method according to Claim 1, in which the clear coat paint (III) contains the hydroxyl-containing resin (F) and the isocyanate crosslinking agent (G) at such ratios that 0.8 - 2.0 equivalent of isocyanate groups in the crosslinking agent (G) are present per equivalent of hydroxyl groups in the resin (F).

12. A method according to Claim 1, in which the three-layered coating film is baked at a temperature within a range of 40 - 110°C for 5 - 60 minutes.

13. Coated articles obtained by the method according to any one of Claims 1 - 12.

## Patentansprüche

1. Verfahren zur Beschichtung von Kunststoffformgegenständen, umfassend Auftragen eines wasserbasierten Primers (I) auf einen Kunststoffformgegenstand, Auftragen eines wasserbasierten Grundbeschichtungsanstrichmittels (II) auf die ungehärtete beschichtete Oberfläche, außerdem Auftragen eines Klarlackanstrichmittels (III) auf die ungehärtete beschichtete Oberfläche und gleichzeitige Wärmebehandlung und Härtung des so gebildeten dreischichtigen Beschichtungsfilms, **dadurch gekennzeichnet, dass**
der wasserbasierte Primer (I) ein wässriges Polyolefinharz (A) und ein wässriges Acrylharz (B) in solchen Verhältnissen enthält, dass das Harz (A) 10-90 Gew.-% ist und das Harz (B) 90-10 Gew.-% ist, bezogen auf den gesamten Feststoffgehalt der zwei Harze,
das wasserbasierte Grundbeschichtungsanstrichmittel (II) ein wässriges Polyurethanharz (C), ein hydroxylhaltiges wässriges Acrylharz und/oder wässriges Polyesterharz (D) und ein Melaminharz (E) in solchen Verhältnissen enthält, dass das Harz (C) 1-50 Gew.-% ist, das Harz (D) 10-96 Gew.-% ist und das Harz (E) 3-40 Gew.-% ist, bezogen auf den gesamten Feststoffgehalt dieser drei Harze, wobei das Melaminharz (E) ein gemischt-Butyl/Methyl-verethertes Melaminharz ist und ein gewichtsdurchschnittliches Molekulargewicht in einem Bereich von 1.500-3.000 hat, und
das Klarlackanstrichmittel (III) ein hydroxylhaltiges Harz (F) und ein Isocyanat-Vernetzungsmittel (G) enthält, wobei das Isocyanat-Vernetzungsmittel (G) eine Polyisocyanatverbindung mit Urethodion-Struktur und wenigstens ein Trimer einer Diisocyanat-Verbindung in einem Feststoffgewichtsverhältnis innerhalb eines Bereichs von 10/90-50/50 enthält.

2. Verfahren gemäß Anspruch 1, wobei das wässrige Polyolefinharz (A) durch Pfropfpolymerisation von polymerisierbarer ungesättigter Dicarbonsäure oder Anhydrid davon zu einem olefinischen Polymer erhalten wird.

3. Verfahren gemäß Anspruch 1, wobei das wässrige Acrylharz (B) ein Carboxyl enthaltendes Acrylharz oder eine Emulsion eines carboxylhaltigen Acrylharzes ist.

4. Verfahren gemäß Anspruch 1, wobei der wasserbasierte Primer (I) das wässrige Polyolefinharz (A) und das wässrige Acrylharz (B) in solchen Verhältnissen enthält, dass das Harz (A) 40-80 Gew.-% ist und das Harz (B) 60-20 Gew.-% ist, bezogen auf den gesamten Feststoffgehalt der zwei Harze.

5. Verfahren gemäß Anspruch 1, wobei das wässrige Polyurethanharz (C) eine wässrige Dispersion von Urethanharz vom selbstemulgierenden Typ mit einer durchschnittlichen Partikelgröße von 0,001-1,0 µm ist, die hergestellt wird durch die Schritte Umsetzen von (i) aliphatischem und/oder alicyclischem Diisocyanat, (ii) Diol mit einem zahlenmittleren Molekulargewicht von 500-5.000, (iii) niedermolekulargewichtiger Polyhydroxylverbindung und (iv) Dimethylolalkansäure mit einem NCO/OH-Äquivalentverhältnis innerhalb eines Bereichs von 1/0,5-1/0,95 durch ein "One-shot" -Verfahren oder ein mehrstufiges Verfahren und Kettenverlängern und Emulgieren des resultierenden Urethan-Präpolymers entweder nach oder während Neutralisiation.

6. Verfahren gemäß Anspruch 1, wobei das hydroxylhaltige wässrige Acrylharz und/oder wässrige Polyesterharz (D) ein wässriges Acrylharz mit einer Säurezahl von 10-100 mgKOH/g und einer Hydroxylzahl von 10-250 mgKOH/g und/oder ein wässriges Polyesterharz mit einer Säurezahl von 10-100 mgKOH/g und einer Hydroxylzahl von 10-300 mgKOH/g ist.

7. Verfahren gemäß Anspruch 1, wobei das Melaminharz (E) ein gemischt-Butyl/Methyl-verethertes Melaminharz ist, das Molverhältnis der Butylethergruppe/Methylethergruppe darin in einem Bereich von 4/6-9/1 liegt.

8. Verfahren gemäß Anspruch 1, wobei das wasserbasierte Grundbeschichtungsanstrichmittel (II) wässriges Polyurethanharz (C), hydroxylhaltiges wässriges Acrylharz und/oder wässriges Polyesterharz (D) und Melaminharz (E) in solchen Verhältnissen, bezogen auf den gesamten Feststoffgehalt dieser drei Harze, umfasst, dass das Harz (C) 3-30 Gew.-% ist, das Harz (D) 30-80 Gew.-% ist und das-Harz (E) 10-30 Gew.-% ist.

9. Verfahren gemäß Anspruch 1, wobei das hydroxylhaltige Harz (F) ein hydroxylhaltiges Acrylharz ist.

10. Verfahren gemäß Anspruch 1, wobei das Isocyanat-Vernetzungsmittel (G) eine Viskosität von nicht höher als 1.000 mPa·s/25°C hat.

11. Verfahren gemäß Anspruch 1, wobei das Klarlackanstrichmittel (III) das hydroxylhaltige Harz (F) und das Isocyanat-Vernetzungsmittel (G) in solchen Verhältnissen enthält, dass 0,8-2,0 Äquivalente an Isocyanatgruppen in dem Vernetzungsmittel (G) pro Äquivalent an Hydroxylgruppen in dem Harz (F) vorliegen.

12. Verfahren gemäß Anspruch 1, wobei der dreischichtige Beschichtungsfilm bei einer Temperatur innerhalb eines Bereichs von 40-110°C für 5-60 Minuten wärmebehandelt wird.

13. Beschichtete Gegenstände, erhalten durch das Verfahren gemäß einem der Ansprüche 1-12.

## Revendications

1. Procédé d'enduction d'articles moulés en matière plastique comprenant les étapes qui consistent à appliquer une couche de primaire à base d'eau (I) sur un article moulé en matière plastique, à appliquer sur la surface enduite non durcie une peinture à l'eau servant de couche de base (II), à appliquer en outre sur la surface enduite non durcie une peinture formant une couche incolore (III), et à cuire et durcir simultanément le film de revêtement à trois couches ainsi formé, **caractérisé en ce que**
la couche de primaire à base d'eau (I) contient une résine polyoléfinique aqueuse (A) et une résine acrylique aqueuse (B) dans des proportions telles que la résine (A) représente 10 à 90 % en poids et la résine (B) 90 à 10 % en poids de la teneur totale en matières solides des deux résines,
la peinture à l'eau servant de couche de base (II) contient une résine polyuréthane aqueuse (C), une résine acrylique aqueuse et/ou une résine polyester aqueuse contenant des groupes hydroxyle (D), et une résine mélamine (E), dans des proportions telles que la résine (C) représente 1 à 50 % en poids, la résine (D) 10 à 96 % en poids et la résine (E) 3 à 40 % en poids de la teneur totale en matières solides de ces trois résines, la résine mélamine (E) étant une résine mélamine éthérifiée de façon mixte par des groupes de type butyle/méthyle et ayant une masse moléculaire moyenne en poids dans la plage de 1 500 à 3 000, et
la peinture formant une couche incolore (III) contient une résine contenant des groupes hydroxyle (F) et un agent de réticulation isocyanate (G), l'agent de réticulation isocyanate (G) contenant un composé de polyisocyanate ayant une structure d'uréthodione et au moins un trimère d'un composé de diisocyanate à raison d'un rapport en poids des matières solides dans la plage de 10/90 à 50/50.

2. Procédé selon la revendication 1, dans lequel la résine polyoléfinique aqueuse (A) s'obtient par une polymérisation par greffage d'un acide dicarboxylique insaturé polymérisable ou d'un anhydride de celui-ci à un polymère oléfinique.

3. Procédé selon la revendication 1, dans lequel la résine acrylique aqueuse (B) est une résine acrylique contenant des groupes carboxyle ou une émulsion de résine acrylique contenant des groupes carboxyle.

4. Procédé selon la revendication 1, dans lequel la couche de primaire à base d'eau (I) contient la résine polyoléfinique aqueuse (A) et la résine acrylique aqueuse (B) dans des proportions telles que la résine (A) représente 40 à 80 % en poids et la résine (B) 60 à 20 % en poids de la teneur totale en matières solides des deux résines.

5. Procédé selon la revendication 1, dans lequel la résine polyuréthane aqueuse (C) est une dispersion aqueuse de résine uréthane de type auto-émulsionnante ayant une taille moyenne de particules de 0,001 à 1,0 µm, que l'on prépare au moyen des étapes qui consistent à faire réagir (i) un diisocyanate aliphatique et/ou alicyclique, (ii) un diol ayant un poids moléculaire moyen en nombre de 500 à 5 000, (iii) un composé polyhydroxylé de faible poids moléculaire et (iv) un acide diméthylolalcanoïque, à un rapport en équivalents NCO/OH dans la plage de 1/0,5 à 1/0,95, au moyen d'un processus en une ou plusieurs étapes ; et à allonger la chaîne et émulsionner le prépolymère d'uréthane qui en résulte, soit après, soit pendant la neutralisation.

6. Procédé selon la revendication 1, dans lequel la résine acrylique aqueuse et/ou la résine polyester aqueuse contenant des groupes hydroxyle (D) est une résine acrylique aqueuse ayant un indice d'acide de 10 à 100 mg de KOH/g et un indice d'hydroxyle de 10 à 250 mg de KOH/g et/ou une résine polyester aqueuse ayant un indice d'acide de 10 à 100 mg de KOH/g et un indice d'hydroxyle de 10 à 300 mg de KOH/g.

7. Procédé selon la revendication 1, dans lequel la résine mélamine (E) est une résine mélamine éthérifiée de façon mixte par des groupes de type butyle/méthyle, le rapport en moles du groupe éther butylique/groupe éther méthylique y étant dans la plage de 4/6 à 9/1.

8. Procédé selon la revendication 1, dans lequel la peinture à l'eau servant de couche de base (II) comprend la résine polyuréthane aqueuse (C), la résine acrylique aqueuse et/ou la résine polyester aqueuse contenant des groupes hydroxyle (D) et la résine mélamine (E) dans des proportions telles, par rapport à la teneur totale en matières solides de ces trois résines, que la résine (C) représente 3 à 30 % en poids, la résine (D) 30 à 80 % en poids, et la résine (E) 10 à 30 % en poids.

9. Procédé selon la revendication 1, dans lequel la résine contenant des groupes hydroxyle (F) est une résine acrylique contenant des groupes hydroxyle.

10. Procédé selon la revendication 1, dans lequel l'agent de réticulation isocyanate (G) présente une viscosité qui n'est pas supérieure à 1000 mPa·s/25 °C.

11. Procédé selon la revendication 1, dans lequel la peinture formant une couche incolore (III) contient la résine contenant des groupes hydroxyle (F) et l'agent de réticulation isocyanate (G) dans des proportions telles que 0,8 à 2,0 équivalents de groupes isocyanate dans l'agent de réticulation (G) sont présents par équivalent de groupes hydroxyle dans la résine (F).

12. Procédé selon la revendication 1, dans lequel le film de revêtement à trois couches est cuit à une température dans la plage de 40 à 110 °C pendant de 5 à 60 minutes.

13. Articles enduits obtenus au moyen du procédé selon l'une quelconque des revendications 1 à 12.
